Europäisches Patentamt

European Patent Office

Office européen des brevets

(11) Veröffentlichungsnummer: **0 192 070**
**A2**

(12) **EUROPÄISCHE PATENTANMELDUNG**

(21) Anmeldenummer: **86100792.0**

(22) Anmeldetag: **22.01.86**

(51) Int. Cl.4: **H04L 11/00**

(30) Priorität: **20.02.85 DE 3505885**

(43) Veröffentlichungstag der Anmeldung:
**27.08.86 Patentblatt 86/35**

(84) Benannte Vertragsstaaten:
**AT DE IT NL**

(71) Anmelder: **Siemens Aktiengesellschaft Berlin und München**
**Wittelsbacherplatz 2**
**D-8000 München 2(DE)**

(72) Erfinder: **Franz, Dietmar, Dipl.-Ing. (FH)**
**Edelweissstrasse 66**
**D-8039 Puchheim(DE)**

(54) **Verfahren zum Übertragen von den Betrieb einer Signalbehandlungseinrichtung betreffenden Steuerinformationen.**

(57) Zum Übertragen von den Betrieb einer Signalbehandlungseinrichtung (SBE) betreffenden Steuerinformationen von einer Datenvermittlungsanlage (EDS) her, welche über eine Anzahl von Übertragungskanälen (K1 bis Kn) mit der betreffenden Signalbehandlungseinrichtung verbunden ist, ist ein gegebenenfalls von den Übertragungskanälen verschiedener Sonderkanal vorgesehen. Über diesen Sonderkanal werden die Steuerinformationen von der Datenvermittlungsanlage her jeweils im Zuge einer gesonderten Verbindung übertragen.

## Verfahren zum Übertragen von den Betrieb einer Signalbehandlungseinrichtung betreffenden Steuerinformationen.

Die Erfindung betrifft ein Verfahren zum Übertragen von den Betrieb einer Signalbehandlungseinrichtung betreffenden Steuerinformationen von einer Datenvermittlungsanlage her, welche über eine Anzahl von Übertragungskanälen mit der betreffenden Signalbehandlungseinrichtung verbunden ist.

Es ist bereits ein als Signalbehandlungseinrichtung zu bezeichnender Teletex-Telex-Umsetzer bekannt (Zeitschrift "Philips Telecommunication Review", Band 39, Nr. 2, Juni 1981, Seiten 49 bis 62). Hierbei handelt es sich um eine Umsetzeinrichtung, die eine Signalübertragung zwischen Datenvermittlungsanlagen unterschiedlicher Vermittlungsnetze ermöglicht. Für die Steuerung des Betriebes dieser Umsetzeinrichtung ist eine Anzahl von externen Schnittstellen vorgesehen, über die unter anderem den Betrieb der Umsetzeinrichtung betreffende Steuerinformationen übertragen werden können. So sind Schnittstellen für den Anschluß von Eingabevorrichtungen vorgesehen, über die vom Bedienpersonal manuell Steuerbefehle, wie z. B. Befehle zum Sperren bzw. Freigeben von Übertragungskanälen, eingegeben werden können. Weitere externe Schnittstellen sind für den Anschluß von Speichermedien vorgesehen, in welchen Befehlsfolgen der Steuerprogramme für den Betrieb der Umsetzeinrichtung gespeichert sind. Diese Befehlsfolgen der Steuerprogramme werden bei der Inbetriebnahme der Umsetzeinrichtung von den Speichermedien zu der Umsetzeinrichtung hin übertragen.

Das Vorhandensein einer Anzahl von unterschiedlichen externen Schnittstellen bringt bei der bekannten Umsetzeinrichtung einerseits den Nachteil mit sich, daß innerhalb der Umsetzeinrichtung ein erheblicher Steuerungsaufwand erforderlich ist, um die an den verschiedenen externen Schnittstellen auftretenden Steuerinformationen aufnehmen und verarbeiten zu können. Andererseits ist aber auch zuweilen von Nachteil, daß bestimmte Steuerinformationen abgebende Einrichtungen, z. B. die genannten Speichermedien, unmittelbar am Ort der Umsetzeinrichtung an diese angeschlossen sind. Dies trifft insbesondere dann zu, wenn die Umsetzeinrichtung und die mit ihr verbundene Datenvermittlungsanlage räumlich getrennt installiert sind. In diesem Fall ist eine Bedienung dieser Einrichtungen, wie sie bei der Inbetriebnahme oder beim Austausch von Speichermedien erforderlich ist, durch das Bedienpersonal der Datenvermittlungsanlage nicht möglich.

Es ist nun Aufgabe der vorliegenden Erfindung, einen Weg zu zeigen, wie bei einem Verfahren der eingangs genannten Art Steuerinformationen für den Betrieb der betreffenden Signalbehandlungseinrichtung von einer diese steuernden Datenvermittlungsanlage her mit einem geringen Steuerungsaufwand gegebenenfalls auch während des Betriebs dieser Signalbehandlungseinrichtung zu dieser hin übertragen werden können.

Gelöst wird die vorstehend aufgezeigte Aufgabe bei einem Verfahren der eingangs genannten Art erfindungsgemäß dadurch, daß zwischen der Signalbehandlungseinrichtung und der Datenvermittlungsanlage ein gegebenenfalls von den Übertragungsleitungen verschiedener Sonderkanal vorgesehen ist, über den Steuerinformationen von der Datenvermittlungsanlage her jeweils im Zuge einer gesonderten Verbindung übertragen werden.

Die Erfindung bringt den Vorteil mit sich, daß für die Übertragung von beliebigen Steuerinformationen zu der Signalbehandlungseinrichtung hin lediglich über eine einzige Prozedur-Schnittstelle vorgesehen ist. Auf diese Weise ist in der Signalbehandlungseinrichtung ein wesentlich geringerer Steuerungsaufwand für die Übernahme von Steuerinformationen erforderlich als beim Stand der Technik. Ein weiterer Vorteil besteht darin, daß gesonderte, an die Signalbehandlungseinrichtung anzuschließende Einrichtungen für die Abgabe von Steuerinformationen nicht erforderlich sind. Vielmehr kann die Abgabe von Steuerinformationen über den Sonderkanal im Zuge einer gesonderten Verbindung von der Datenvermittlungsanlage her erfolgen.

Bei einer vorteilhaften Ausgestaltung der Erfindung erfolgt der Aufbau der jeweiligen gesonderten Verbindung von einer Bedienungseinrichtung der Datenvermittlungsanlage her. Bei dieser Bedienungseinrichtung kann es sich beispielsweise um eine als Eingabeeinrichtung benutzte Bürofernschreibstation handeln, die an eine gesonderte Eingabe- Schnittstelle der Datenvermittlungsanlage angeschlossen wird.

Ein besonders geringer Steuerungsaufwand in der Datenvermittlungsanlage ergibt sich dann, wenn die Bedienungseinrichtung an eine Teilnehmerleitung der Datenvermittlungsanlage angeschlossen wird. Auf diese Weise wird die Bedienungseinrichtung, bei der es sich z. B. wieder um eine Bürofernschreibstation handeln kann, von der Datenvermittlungsanlage her wie eine Teilnehmereinrichtung behandelt, so daß für die Abgabe von Steuerinformationen in der Datenvermittlungsanlage lediglich Steuerungsvorgänge für den normalen Vermittlungsbetrieb zu aktivieren sind.

Steuerinformationen können über den Sonderkanal jeweils entweder während der Datenübertragungsphase der jeweiligen gesonderten Verbindung oder in Form eines Dienstsignales im Zuge des Verbindungsaufbaues einer solchen gesonderten Verbindung übertragen werden. Zweckmäßigerweise wird für die Übertragung von Steuerinformationen die Datenübertragungsphase immer dann gewählt, wenn die Steuerinformationen jeweils in Form einer größeren Datenmenge zu übertragen sind. Sind dagegen als Steuerinformationen lediglich geringe Datenmengen zu übertragen, so ist es vorteilhaft, diese als Dienstsignale im Zuge des Verbindungsaufbaues zu übertragen. Auf diese Weise wird die Belegung des Sonderkanals für die einzelnen Verbindungen reduziert, da eine Verbindung bereits vor Eintritt in die Datenübertragungsphase wieder ausgelöst werden kann.

Als Steuerinformationen können in vorteilhafter Weise die Übertragungsleitungen der Signalbehandlungseinrichtung beschreibende Parameter übertragen werden, die in einen Datenspeicher der Signalbehandlungseinrichtung übernommen werden. Auf diese Weise ist es möglich, für den Betrieb der Signalbehandlungseinrichtung erforderliche beschreibende Parameter für sämtliche Übertragungsleitungen bei der Inbetriebnahme der Signalbehandlungseinrichtung oder einzelne Übertragungsleitungen beschreibende Parameter während des Betriebs der Signalbehandlungseinrichtung zu übertragen.

Es können aber auch in vorteilhafter Weise als Steuerinformationen jeweils eine Anzahl von Steuerbefehlen übertragen werden, die in einen Programmspeicher der Signalbehandlungseinrichtung übernommen werden. Auf diese Weise ist ein Fernladen von Befehlsfolgen der Steuerprogramme in die Signalbehandlungseinrichtung möglich.

Ein solchen Fernladen bringt den Vorteil einer einfachen Aktualisierung der Steuerprogramme mit sich, falls Änderungen in den Befehlsfolgen der Steuerprogramme durchzuführen sind. Darüber hinaus bringt ein solches Fernladen den Vorteil mit sich, daß von einer zentralen Stelle aus, d. h. von einer Datenvermittlungsanlage aus, eine Aktualisierung der Steuerprogramme einer Vielzahl von Signalbehandlungseinrichtungen möglich ist.

Im folgenden wird nun die Erfindung anhand einer Zeichnung beispielsweise näher beschrieben.

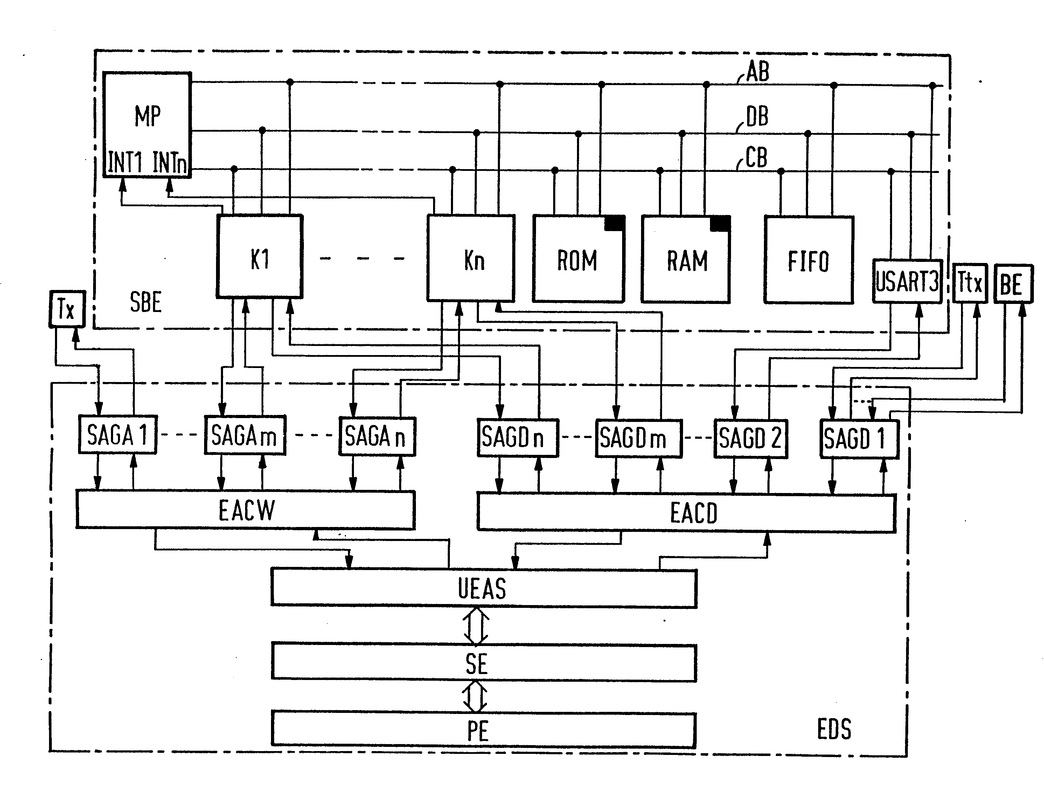

In der Zeichnung ist ausschnittweise eine Datenvermittlungsanlage EDS dargestellt. Über diese sind allgemein Datensignale übertragbar, unter die auch beispielsweise Fernschreibsignale oder Sprachsignale in digital codierter Form fallen. Zur Verdeutlichung wird deshalb im folgenden die Datenvermittlungsanlage EDS als Fernschreib- und Datenvermittlungsanlage bezeichnet.

Von der Fernschreib- und Datenvermittlungsanlage EDS sind lediglich zu einer ersten Gruppe von Anschlußschaltungen gehörende Anschlußschaltungen SAGA1, SAGAm, SAGAn, zu einer zweiten Gruppe von Anschlußschaltungen gehörende Anschlußschaltungen SAGD1, SAGD2, SAGDm und SAGDn, den einzelnen Gruppen von Anschlußschaltungen zugehörige Eingabe-/Ausgabe-Codewandler EACW bzw. EACD, eine Übertragungsablaufsteuerung UEAS, eine Speichereinheit SE und eine Programmsteuereinheit PE angedeutet. Die mit dem Eingabe-/Ausgabe-Codewandler EACW verbundenen Anschlußschaltungen (SAGA1 bis SAGAn) dienen dazu, digitale Datensignale polaritätswechselweise zu verarbeiten. Die mit dem anderen Eingabe-/Ausgabe-Codewandler EACD verbundenen Anschlußschaltungen dienen dagegen zur Verarbeitung von sogenannten Bitgruppen. Diese Bitgruppen sind jeweils eine Mehrzahl von Bits, beispielsweise 8 Bits, umfassende digitale Datensignale, die auch als Envelopes bezeichnet werden. Die Aufgabe dieser Eingabe/Ausgabe-Codewandler besteht u. a. darin, über die einzelnen Anschlußschaltungen zugeführte Signale zu dem eigentlichen Verarbeitungsteil der Fernschreib- und Datenvermittlungsanlage EDS weiterzuleiten bzw. von diesem Verarbeitungsteil her über die Anschlußschaltungen abzugebende Signale weiterzuleiten. Die Eingabe-/Ausgabe-Codewandler sind hierzu mit der Übertragungsablaufsteuerung UEAS verbunden. Diese Übertragungsablaufsteuerung steuert den Signalaustausch zwischen den Eingabe-/Ausgabe-Codewandlern und der Speichereinheit SE, die bestimmte, ihr von der Übertragungsablaufsteuerung zugeführte Signale an die Programmsteuereinheit PE weiterleitet. Außerdem gibt die Speichereinheit SE die ihr von der Programmsteuereinheit zugeführten Signale an die Übertragungsablaufsteuerung UEAS ab.

Von den Polaritätswechsel verarbeitenden Anschlußschaltungen sind einige mit Teilnehmereinrichtungen verbunden, welche digitale Signale mit einer ersten Datenübertragungsprozedur abgeben bzw. aufnehmen. Bei diesen Teilnehmereinrichtungen mag es sich um übliche Fernschreib- bzw. Telex-Endgeräte handeln, von denen in der Zeichnung eines mit Tx bezeichnet ist. Diese Telex-Endgeräte mögen mit einer für Telexübertragungen üblichen Datenübertragungsrate von 50 Bd und unter Ausnutzung des internationalen Telegrafenalphabets Nr. 2 arbeiten, also mit einem Start-Stop-Datenformat. Das Telex-Endgerät Tx ist dabei beispielsweise über eine Leitungsanordnung an der Anschlußschaltung SAGA1 angeschlossen. Eine Anschlußschaltung ermöglicht dabei im allgemeinen den Anschluß einer Mehrzahl von Telex-Endgeräten. Zur Vereinfachung der Zeichnung ist jedoch lediglich ein Anschluß angedeutet. Diese Vereinfachung gilt im übrigen auch für die anderen in der Zeichnung dargestellten Anschlußschaltungen.

Mit einigen der digitale Datensignale in Form von Bitgruppen bzw. Envelopes verarbeitenden Anschlußschaltungen (SAGD1 bis SAGDn) sind Einrichtungen verbunden, die digitale Nachrichtensignale mit einer zweiten Datenübertragungsprozedur abgeben bzw. aufnehmen, und zwar seriell in Form von Bitgruppen bzw. Envelopes. Bei diesen Einrichtungen mag es sich beispielsweise um sogenannte Bürofernschreibstationen handeln, die auch als Teletex-Endgeräte bezeichnet werden. In der Zeichnung ist ein derartiges Teletex-Endgerät mit Ttx bezeichnet. Dieses Teletex-Endgerät ist an der Anschlußschaltung SAGD1 angeschlossen. Diese Anschlußschaltung steht außerdem noch mit einer weiteren in der Zeichnung mit BE bezeichneten Einrichtung in Verbindung. Bei dieser Einrichtung, auf die im folgenden noch näher eingegangen wird, handelt es sich um eine Bedienungseinrichtung der Fernschreib- und Datenvermittlungsanlage. Bezüglich der mit der zuletzt genannten Anschlußschaltung verbundenen Einrichtungen sei noch angemerkt, daß diese beispielsweise seriell auftretende digitale Datensignale entsprechend dem internationalen Alphabet IA Nr. 5 mit einer Datenübertragungsrate von beispielsweise 2400 bit/s abgeben und aufnehmen können, und zwar als synchrone Datensignale.

An die genannten Anschlußschaltungen können auch anstelle von Telex-Endgeräten bzw. Teletex-Endgeräten Übertragungsleitungen angeschlossen sein, die die Fernschreib- und Datenvermittlungsanlage EDS mit weiteren Datenvermittlungsanlagen verbinden.

Mit der in der Zeichnung dargestellten Fernschreib- und Datenvermittlungsanlage EDS ist eine Signalbehandlungseinrichtung SBE verbunden. Diese Signalbehandlungseinrichtung dient zur Behandlung von über die Fernschreib- und Datenvermittlungsanlage zu übertragenden Datensignalen. Eine Behandlung von Datensignalen kann dabei beispielsweise in einer Datenübertragungsprozedur- und/oder Datenformatumsetzung, in einer Weiterleitung der Datensignale an eine vorgegebene Anzahl von Teilnehmerstellen oder auch in einer Zwischenspeicherung der Datensignale bis zu deren Abruf durch eine autorisierte Person bestehen. Derartige Signalbehandlungseinrichtungen werden auch allgemein als Sende- und Empfangshilfe bezeichnet. Als Beispiele für derartige Signalbehandlungseinrichtungen seien hier genannt Signalumsetzer, Rundsendeeinrichtungen, welche an eine Mehrzahl von Teilnehmerstellen weiterzuleitende Datensignale zugeführt erhalten, und Einrichtungen für den elektronischen Briefdienst (Mail-Box), in denen von autorisierten Personen abrufbare Nachrichten (Datensignale) zwischengespeichert sind.

Die in der Zeichnung dargestellte Signalbehandlungseinrichtung SBE weist einen Mikroprozessor MP auf, der an ein Busleitungssystem angeschlossen ist. Dieses Busleitungssytem besteht aus einem Adressbus AB, einem Datenbus DB und einem Steuerbus CB. An dieses Busleitungssystem ist außerdem eine Mehrzahl von Übertragungskanälen K1 bis Kn angeschlossen. Diese Übertragungskanäle dienen sowohl zur Übertragung von zu behandelnden Datensignalen zu der Signalbehandlungseinrichtung hin als auch zur Abgabe von in dieser behandelten Datensignalen an die Fernschreib- und Datenvermittlungsanlage. Intern weisen die Übertragungskanäle im wesentlichen Schnittstellenschaltungen für den Anschluß an die bereits oben erwähnten Anschlußschaltungen der Fernschreib- und Datenvermittlungsanlage EDS auf.

Jeder der gerade genannten Übertragungskanäle K1 bis Kn ist sowohl mit einer zu der ersten Gruppe von Anschlußschaltungen SAGA1 bis SAGAn gehörenden Anschlußschaltung als auch mit einer zu der zweiten Gruppe von Anschlußschaltungen SAGD1 bis SAGDn gehörenden Anschlußschaltung verbunden. In der Zeichnung ist der Übertragungskanal K1 an die Anschlußschaltungen SAGAm und SAGDn angeschlossen. Der Übertragungskanal Kn ist dagegen mit den Anschlußschaltungen SAGAn und SAGDm verbunden.

Wie bereits erwähnt, sind die Übertragungskanäle K1 bis Kn über das interne Busleitungssystem der Signalbehandlungseinrichtung SBE mit dem Mikroprozessor MP verbunden. Über dieses Busleitungssystem erfolgt die Signalübertragung von bzw. zu dem Mikroprozessor hin. Der Mikroprozessor ist außerdem mit seinen Unterbrechungseingängen INT1 bis INTn jeweils an einen Übertragungskanal K1 bis Kn angeschlossen. Über diese Verbindungen kann der Mikroprozessor MP in seinem Betrieb von den Übertragungskanälen her veranlaßt werden, die Abwicklung von Datenübertragungsvorgängen zu steuern.

An das Busleitungssystem der Signalbehandlungseinrichtung SBE ist außerdem eine Speicheranordnung mit entsprechenden Anschlüssen angeschlossen. Zu dieser Speicheranordnung gehört ein Festwertspeicher ROM, in dem die für die Inbetriebnahme der Signalbehandlungseinrichtung erforderliche Befehlsfolge für den Mikroprozessor gespeichert ist. Daneben ist ein Speicher RAM mit wahlfreiem Zugriff vorgesehen. Bei diesem Speicher handelt es sich um einen Schreib-/Lese-Speicher. In diesen werden die über die Übertragungskanäle K1 bis Kn übertragenen zu behandelnden Datensignale und die Befehlsfolge der Steuerprogramme zwischengespeichert. Schließlich gehört zu der Speicheranordnung noch ein Durchlaufspeicher FIFO. In diesem Durchlaufspeicher werden, wie im folgenden noch erläutert werden wird, von der Fernschreib- und Datenvermittlungsanlage EDS abgebende Steuerinformationen zwischengespeichert.

Mit dem bereits erwähnten Busleitungssystem der Signalbehandlungseinrichtung SBE ist schließlich noch eine Schnittstellenschaltung USART3 verbunden. Über diese Schnittstellenschaltung werden von der Fernschreib- und Datenvermittlungsanlage her die Steuerinformationen übertragen. Die Schnittstellenschaltung ist hierfür mit einer zu der zweiten Gruppe von Anschlußschaltungen der Fernschreib- und Datenvermittlungsanlage gehörenden Anschlußschaltung verbunden. Diese möge beispielsweise die in der Zeichnung mit SAGD2 bezeichnete Anschlußschaltung sein.

Nachdem zuvor der Aufbau der in der Zeichnung dargestellten Schaltungsanordnung erläutert worden ist, sei nunmehr die Arbeitsweise dieser Schaltungsanordnung näher betrachtet. Hierzu sei zunächst kurz auf das Prinzip der Datensignalübertragung zwischen der Fernschreib- und Datenvermittlungsanlage EDS und der Signalbehandlungseinrichtung SBE eingegangen, ehe dann die Übertragung von Informationssignalen zu der Fernschreib- und Datenvermittlungsanlage hin erläutert wird. Hierzu sei angenommen, daß die Signalbehandlungseinrichtung SBE eine Umsetzung von ihr zugeführten Teletex-Signalen in Telex-Signale ermöglicht. Sind beispielsweise von dem in der Zeichnung dargestellten Teletex-Endgerät Ttx Datensignale zu dem Telex-Endgerät Tx zu übertragen, so wird zunächst zwischen dem genannten Teletex-Endgerät und der Fernschreib- und Datenvermittlungsanlage EDS eine Verbindung aufgebaut, beispielsweise entsprechend der CCITT-Empfehlung X.21. Aus den im Zuge des Verbindungsaufbaues von dem Teletex-Endgerät her übertragenen Wählzeichen geht hervor, daß eine Verbindung zu einem Telex-Endgerät gewünscht ist, d. h. daß eine Umsetzung der Übertragungsprozedur vorzunehmen ist. Derartige Wählzeichen werden in der Fernschreib- und Datenvermittlungsanlage als solche erkannt. Auf die Funktionen der Fernschreib- und Datenvermittlungsanlage wird hier jedoch nicht näher eingegangen. Diese Funktionen sind bereits hinlänglich bekannt (siehe beispielsweise "Siemens-Zeitschrift", Heft 2, 1977, Seiten 82 bis 87).

Bei Erkennen von Verbindungswünschen zu der Signalbehandlungseinrichtung hin belegt die Fernschreib- und Datenvermittlungsanlage EDS einen bis dahin freien Übertragungskanal der Signalbehandlungseinrichtung SBE. Nach der Belegung eines solchen Übertragungskanals wird dann von der Fernschreib- und Datenvermittlungsanlage her eine Verbindung über den belegten Übertragungskanal zu der Signalbehandlungseinrichtung hin aufgebaut. Der Verbindungsaufbau kann dabei beispielsweise gemäß der CCITT-Empfehlung X.71 erfolgen. Nach einem erfolgten Aufbau der Verbindung werden dann die umzusetzenden Datensignale zu der Signalbehandlungseinrichtung hin übertragen. Für die Aufnahme von umzusetzenden Datensignalen werden den einzelnen Übertragungskanälen der Signalbehandlungseinrichtung dabei Speicherbereiche des Schreib-/Lese-Speichers RAM durch den Mikroprozessor MP zugeordnet. Zusammen mit den umzusetzenden Datensignalen werden im übrigen auch noch Signalisierungsinformationen zwischengespeichert, die eine anschließende Weiterleitung der umgesetzten Datensignale an den in Frage kommenden Empfänger dieser Datensignale ermöglichen. Bei dem hier gewählten Beispiel ist dies das Telex-Endgerät Tx.

In einem Speicherbereich des Schreib-/Lese-Speichers RAM zwischengespeicherte Datensignale werden anschließend von dem Mikroprozessor MP in von Telex-Endgeräten verarbeitbare Signale umgesetzt und im Zuge einer weiteren Verbindung zu dem als Empfänger in Frage kommenden Telex-Endgerät hin übertragen, also hier zu dem Telex-Endgerät Tx hin.

Den gerade am Beispiel einer Signalübertragung von einem Teletex-Endgerät her erläuterten Verfahrensschritten entsprechende Verfahrensschritte laufen auch dann ab, wenn von einem Telex-Endgerät her Signale zu einem Teletex-Endgerät hin zu übertragen sind.

Es wurde bereits oben darauf hingewiesen, daß es sich bei der Signalbehandlungseinrichtung SBE auch um eine Rundsendeeinrichtung handeln kann. Auch in diesem Fall wird, wie bereits erläutert, anhand der von einem Teilnehmer-Endgerät her im Zuge des Verbindungsaufbaus übertragenen Wählzeichen erkannt, daß von der Fernschreib- und Datenvermittlungsanlage her eine Verbindung zu der Rundsendeeinrichtung aufzubauen ist. Im Zuge dieser Verbindung werden dann die weiterzuleitenden Datensignale sowie Angaben bezüglich der als Empfänger in Frage kommenden Teilnehmer-Endgeräte zu der Rundsendeeinrichtung hin übertragen. Für die Weiterleitung dieser Datensignale wird dann von dem Mikroprozessor MP der Rundsendeeinrichtung eine der Anzahl der in Frage kommenden Empfänger entsprechende Anzahl von Verbindungen aufgebaut. Die Weiterleitung der Datensignale kann im übrigen auch mit einer Umsetzung kombiniert sein, wenn beispielsweise Signale zwischen Telex-Endgeräten und Teletex-Endgeräten zu übertragen sind.

Schließlich kann es sich, wie bereits oben erwähnt, bei der Signalbehandlungseinrichtung SBE auch um eine Einrichtung für den elektronischen Briefdienst handeln. In diesem Fall erfolgt die Übertragung von Datensignalen zu der Signalbehandlungseinrichtung hin in der bereits dargestellten Weise. Ein Unterschied zu einer Signalumsetzeinrichtung bzw. zu einer Rundsendeeinrichtung besteht lediglich darin, daß die in die Signalbehandlungseinrichtung übernommenen Datensignale nicht automatisch weitergeleitet werden, sondern von einem Teilnehmer-Endgerät her abrufbar sind. Der Abruf kann dabei beispielsweise durch autorisierte Personen erfolgen.

Nunmehr wird auf die Übertragung von den Betrieb der Signalbehandlungseinrichtung betreffenden Steuerinformationen zu der Signalbehandlungseinrichtung SBE hin näher eingegangen. Unter diese Steuerinformationen fallen u. a. die einzelnen Übertragungskanäle K1 bis Kn beschreibende Parameter, mit deren Hilfe die Datensignalübertragung über die Übertragungskanäle gesteuert wird. Beispiele für derartige Parameter sind den Übertragungskanälen individuell zugeordnete Informationen bezüglich des momentanen Kanalzustandes. Mögliche Kanalzustände sind beispielsweise der Freizustand, in dem keine Signalübertragung über den jeweiligen Übertragungskanal erfolgt, der Belegtzustand bei Einbeziehung des jeweiligen Übertragungskanals in eine Signalübertragung und - schließlich der Sperrzustand, in dem eine Einbeziehung des jeweiligen Übertragungskanals in eine Signalübertragung ausgeschlossen ist. Für die Speicherung der die Übertragungskanäle beschreibenden Parameter sind im übrigen den Übertragungskanälen K1 bis Kn in dem Schreib-/Lese-Speicher RAM der Signalbehandlungseinrichtung kanalindividuelle Speicherbereiche zugeordnet.

Unter die zu der Signalbehandlungseinrichtung SBE hin zu übertragenden Steuerinformationen fallen aber auch zu den Steuerprogrammen für den Betrieb der Signalbehandlungseinrichtung gehörende Steuerbefehlsfolgen, die bei einer Inbetriebnahme der Signalbehandlungseinrichtung in den bereits genannten Schreibe-/Lese-Speicher RAM geladen werden. Für dieses Laden ist in dem Festwertspeicher ROM lediglich die zu einem Ladeprogramm gehörende Befehlsfolge gespeichert. Die für den Betrieb der Signalbehandlungseinrichtung erforderlichen Steuerprogramme sind dagegen ausschließlich nach einem entsprechenden Laden in dem Schreib-/Lese-Speicher gespeichert.

Nach diesen Vorbetrachtungen sei nun angenommen, daß im Zuge der Inbetriebnahme der Signalbehandlungseinrichtung SBE den Steuerprogrammen zugehörige Steuerbefehlsfolgen zu übertragen sind. Hierzu sei angenommen, daß diese Steuerbefehlsfolge in einem Speichermedium der in der Zeichnung mit BE bezeichneten Bedienungseinrichtung gespeichert ist. Für die Übertragung dieser Steuerbefehlsfolge wird von dieser Bedienungseinrichtung her eine Verbindung über einen von den Übertragungskanälen K1 bis Kn verschiedenen Sonderkanal zu der Signalbehandlungseinrichtung SBE hin aufgebaut. Dieser Sonderkanal möge, wie in der Zeichnung dargestellt, über die Anschlußschaltungen SAGD1 und SAGD2 der Fernschreib- und Datenvermittlungsanlage EDS und über die Schnittstellenschaltung USART3 der Signalbehandlungseinrichtung verlaufen. Der Verbindungsaufbau erfolgt dabei in zwei Schritten. In einem ersten Schritt wird beispielsweise von der Bedienungseinrichtung BE her eine Verbindung zu der Fernschreib- und Datenvermittlungsanlage gemäß CCITT-Empfehlung X.21 aufgebaut. In einem weiteren Schritt wird dann zwischen dieser Fernschreib- und Datenvermittlungsanlage und der Signalbehandlungseinrichtung SBE eine Verbindung gemäß CCITT-Empfehlung X.71 hergestellt. Ein derartiger in zwei Schritten verlaufender Verbindungsaufbau ist im übrigen, wie bereits oben erwähnt, auch bei über die Übertragungskanäle K1 bis Kn verlaufenden Verbindungen vorgesehen.

Für den gerade erwähnten Verbindungsaufbau zu der Signalbehandlungseinrichtung SBE hin ist im übrigen in dem Festwertspeicher ROM eine einen solchen Verbindungsaufbau ermöglichende Steuerbefehlsfolge gespeichert. Entsprechend dieser Steuerbefehlsfolge wird von dem Mikroprozessor MP der Signalbehandlungseinrichtung her der Verbindungsaufbau abgewickelt.

Nach dem vollständigen Aufbau der vorstehend erläuterten Verbindung erfolgt dann die Übertragung der eigentlichen Steuerinformationen, d. h. die Übertragung der zu den Steuerprogrammen der Signalbehandlungseinrichtung gehörenden Steuerbefehlsfolge. Diese Steuerbefehlsfolge wird von dem Mikroprozessor der Signalbehandlungseinrichtung nacheinander übernommen und in die für diese Steuerbefehlsfolge vorgesehenen Speicherbereiche des Schreib-/Lese-Speichers RAM übertragen. Nach der vollständigen Übernahme der Steuerbefehlsfolge wird dann die zwischen der Bedienungseinrichtung BE und der Signalbehandlungseinrichtung SBE bestehende Verbindung in bekannter Weise wieder abgebaut. Von diesem Zeitpunkt an steht dann die Signalbehandlungseinrichtung mit ihren Übertragungskanälen K1 bis Kn für eine Behandlung von Datensignalen zur Verfügung.

Es ist nun auch möglich, während des Betriebs der Signalbehandlungseinrichtung Steuerinformationen zu dieser hin zu übertragen. Der dafür erforderliche Verbindungsaufbau erfolgt dabei im wesentlichen in der bereits oben angegebenen Weise. Ein Unterschied besteht lediglich darin, daß während des Betriebs der Signalbehandlungseinrichtung der Mikroprozessor MP von der Schnittstellenschaltung USART3 nur in vorgegebenen Zeitabständen bereitstehende Signale übernimmt, um den laufenden Betrieb der Signalbehandlungseinrichtung nicht zu stören.

Bei den während des Betriebs nach einem Verbindungsaufbau zu übertragenden Steuerinformationen handelt es sich im wesentlichen um einzelne Übertragungskanäle betreffende Steuerinformationen, z. B. um Parameter für die kanalindividuelle Änderung des Kanalzustandes der einzelnen Übertragungskanäle. Eine solche Änderung kann beispielsweise in einer Überführung des jeweiligen Übertragungskanals in den Sperrzustand oder aber auch in einer Überführung von diesem Sperrzustand in den Freizustand bestehen.

Steuerinformationen der gerade genannten Art werden zunächst in den in der Zeichnung mit FIFO bezeichneten Durchlaufspeicher der Signalbehandlungseinrichtung übernommen. Dieser Durchlaufspeicher wird von dem mit ihm verbundenen Mikroprozessor MP in vorgegebenen Zeitabständen auf das Vorhandensein von Steuerinformationen abgefragt. Ist eine derartige Steuerinformation vorhanden, so wird diese Steuerinformation von dem Mikroprozessor dann bearbeitet, wenn der diese Steuerinformation betreffende Übertragungskanal (K1 bis Kn) sich in dem bereits oben angegebenen Freizustand oder Sperrzustand befindet. Befindet er sich dagegen in einem Belegtzustand, d. h. ist er in eine Datensignalübertragung einbezogen, so wird die in dem Durchlaufspeicher anstehende Steuerinformation erst nach Beendigung des Belegtzustandes bearbeitet. Auf diese Weise wird verhindert, daß eine über den betreffenden Übertragungskanal verlaufende Datensignalübertragung gestört wird.

In dem Durchlaufspeicher FIFO können im übrigen gleichzeitig mehrere Steuerinformationen, die im Zuge verschiedener Verbindungen übertragen worden sind, gespeichert sein. Die Bearbeitung dieser Steuerinformationen erfolgt dann in der Reihenfolge ihrer Einspeicherung in den Durchlaufspeicher.

Bisher wurde davon ausgegangen, daß auch während des Betriebs der Signalbehandlungseinrichtung SBE Steuerinformationen jeweils erst nach dem vollständigen Aufbau der jeweiligen Verbindung von der Bedienungseinrichtung BE übertragen werden. Es kann nun aber auch so vorgegangen werden, daß Steuerinformationen bereits im Zuge des Aufbaues der jeweiligen Verbindungen in Form von Dienstsignalen übertragen werden. Eine derartige Vorgehensweise ist zweckmäßig, wenn es sich bei den Steuerinformationen jeweils lediglich um eine geringe zu übertragende Datenmenge handelt. Auf diese Weise kann durch Bewertung der Dienstsignale in der Signalbehandlungseinrichtung SBE die für eine Signalübertragung erforderliche Verbindungsdauer gering gehalten werden. Treten dagegen die Steuerinformationen, wie im Fall der Inbetriebnahmne der Signalbehandlungseinrichtung, in Form von größeren Datenmengen auf, so erfolgt die Übertragung zweckmäßigerweise während der Datenübertragungsphase der einzelnen Verbindungen.

In der Zeichnung ist lediglich der Fall angegeben, daß die Bedienungseinrichtung BE an eine mit der Anschlußschaltung SAGD1 der Fernschreib- und Datenvermittlungsanlage EDS verbundene Teilnehmerleitung angeschlossen ist. Abweichend davon ist es auch möglich, daß die Bedienungseinrichtung an eine gesonderte, für Bedienungseingaben vorgegebene Schnittstelle der Fernschreib- und Datenvermittlungsanlage angeschlossen ist. Dabei kann es sich bei der Bedienungseinrichtung beispielsweise um einen Bedienungsblattschreiber handelt.

Die Übertragung von Steuerinformationen zu der Signalbehandlungseinrichtung SBE hin kann auch direkt von der Fernschreib- und Datenvermittlungsanlage EDS her ohne Einbeziehung einer speziellen Bedienungseinrichtung erfolgen, wenn die zu übertragenden Steuerinformationen in der Fernschreib- und Datenvermittlungsanlage hinterlegt sind. In diesem Falle übernimmt diese die Steuerung des für eine Signalübertragung erforderlichen Verbindungsaufbaus über den Sonderkanal.

Vorstehend wurde lediglich der Fall betrachtet, daß für die Übertragung von Steuerinformationen ein von den Übertragungskanälen K1 bis Kn verschiedener Sonderkanal benutzt wird. Es kann aber auch ein geade nicht in eine Übertragung von Datensignalen einbezogener Übertragungskanal für die Dauer der Übertragung von Steuerinformationen als Sonderkanal benutzt werden. In diesem Fall ist für die Realisierung des Sonderkanals kein zusätzlicher schaltungstechnischer Aufwand erforderlich.

Zur Erläuterung der vorliegenden Erfindung wurde vorstehend auf die Übertragung bestimmter Steuerinformationen während der Inbetriebnahme der Signalbehandlungseinrichtung bzw. während des Betriebs derselben näher eingegangen. Das Verfahren gemäß der vorliegenden Erfindung ist jedoch nicht nur für die Übertragung der vorstehend angegebenen Steuerinformationen anwendbar. Vielmehr kann nach diesem immer dann verfahren werden, wenn beliebige Steuerinformationen bei der Inbetriebnahme oder während des Betriebes der Signalbehandlungseinrichtung zu dieser hin zu übertragen sind.

**Ansprüche**

1. Verfahren zum Übertragen von den Betrieb einer Signalbehandlungseinrichtung (SBE) betreffenden Steuerinformationen von einer Datenvermittlungsanlage (EDS) her, welche über eine Anzahl von Übertragungskanälen (K1 bis Kn) mit der betreffenden Signalbehandlungseinrichtung verbunden ist, **dadurch gekennzeichnet,** daß zwischen der Signalbehandlungseinrichtung (SBE) und der Datenvermittlungsanlage (EDS) ein gegebenenfalls von den Übertragungskanälen (K1 bis Kn) verschiedener Sonderkanal (USART3) vorgesehen ist, über den Steuerinformationen von der Datenvermittlungsanlage her jeweils im Zuge einer gesonderten Verbindung übertragen werden.

2. Verfahren nach Anspruch 1, **dadurch gekennzeichnet,** daß der Aufbau der jeweiligen gesonderten Verbindung von einer Bedienungseinrichtung (BE) der Datenvermittlungsanlage (EDS) her erfolgt.

3. Verfahren nach Anspruch 2, **dadurch gekennzeichnet,** daß die Bedienungseinrichtung (BE) an eine Teilnehmerleitung der Datenvermittlungsanlage (EDS) angeschlossen wird.

4. Verfahren nach einem der Ansprüche 1 bis 3, **dadurch gekennzeichnet,** daß Steuerinformationen jeweils während der Datenübertragungsphase der jeweiligen gesonderten Verbindung übertragen werden.

5. Verfahren nach einem der Ansprüche 1 bis 3, **dadurch gekennzeichnet,** daß Steuerinformationen jeweils in Form eines Dienstsignals im Zuge des Verbindungsaufbaus übertragen werden.

6. Verfahren nach einem der Ansprüche 1 bis 5, **dadurch gekennzeichnet,** daß als Steuerinformationen die Übertragungskanäle (K1 bis Kn) beschreibende Parameter übertragen werden, die in einen Datenspeicher (RAM) der Signalbehandlungseinrichtung (SBE) übernommen werden.

7. Verfahren nach einem der Ansprüche 1 bis 5, **dadurch gekennzeichnet**, daß als Steuerinformationen jeweils eine Anzahl von Steuerbefehlen übertragen wird, die in einen Programmspeicher (RAM) der Signalbehandlungseintung (SBE) übernommen werden.

0 192 070